Europäisches Patentamt

(19) European Patent Office

Office européen des brevets

(11) Numéro de publication: **0 150 628**
**B1**

(12) **FASCICULE DE BREVET EUROPÉEN**

(45) Date de publication du fascicule du brevet:
**13.01.88**

(21) Numéro de dépôt: **84400186.7**

(22) Date de dépôt: **27.01.84**

(51) Int. Cl.⁴: **A 01 F 15/00**

(54) Presse à balles cylindriques ou rondes avec moyens augmentant la tension des courroies ou analogues.

(43) Date de publication de la demande:
**07.08.85 Bulletin 85/32**

(45) Mention de la délivrance du brevet:
**13.01.88 Bulletin 88/2**

(84) Etats contractants désignés:
**DE FR GB IT NL**

(56) Documents cité:
**EP-A-0 076 502**

(73) Titulaire: **JOHN DEERE (Société Anonyme), 20, Rue André Dessaux, F-45401 Fleury- les- Aubrais (FR)**

(72) Inventeur: **Anstey, Henry Dennis, RR4 Box 188a, Ottumwa Iowa 52501 (US)**
Inventeur: **Viaud, Jean, 16, Rue de l'Ecole, F-57200 Sarreguemines (FR)**

(74) Mandataire: **Pruvost, Marc Henri, Cabinet ORES 6, Avenue de Messine, F-75008 Paris (FR)**

## Description

La présente invention concerne les presses à balles cylindriques ou rondes.

Ces presses sont d'un type général bien connu (voir p.e. EP-A-76 502) et comprennent des jeux de courroies, bandes ou analogues (tous ces éléments étant compris dans le terme "courroies" utilisé dans l'ensemble de la description) qui, par leur déplacement forment par enroulement à l'intérieur d'une chambre ménagée dans le corps de la presse une balle de forme générale cylindrique à partir de produits de récolte, notamment de fourrage ou de foin, ramassés sur le champ au cours de la progression de la presse. Quand la balle a atteint le diamètre désiré et a été liée, la porte arrière de la presse est ouverte et la balle est déchargée sur le sol. La formation d'une autre balle par enroulement peut ensuite être déclenchée à l'intérieur de la presse.

Pour pouvoir obtenir pour la balle la densité requise, fournissant une cohésion suffisante pour éviter la désagrégation ou l'effritement de la balle liée après son déchargement sur le sol et lors de sa manutention ultérieure, il est nécessaire de soumettre les courroies de formation de la balle à l'effet d'une tension, ces courroies résistant alors à l'accroissement de diamètre de la balle pour "serrer" les produits de récolte lors de leur enroulement sur eux-mêmes.

Dans une presse à balles rondes de ce type, les courroies ou analogues passent sur des rouleaux fixes dont l'un au moins est entraîné de façon positive par un arbre d'entraînement principal raccordé à l'arbre de prise de force du tracteur auquel la presse est attelée, et sur des rouleaux mobiles dont le déplacement permet cette augmentation de diamètre de la balle en cours de formation. Pour la mise en tension des courroies, ces rouleaux mobiles sont soumis à l'effet de moyens de sollicitation, tels que des cylindres hydrauliques ou des ressorts, qui résistent à leur déplacement sous l'effet de l'augmentation de diamètre de la balle pour comprimer cette dernière.

Sous l'effet de la résistance à l'enroulement des produits pour former la balle, une certaine tension s'exerce également dans les courroies en amont du rouleau d'entraînement si l'on considère le sens de déplacement de ces courroies.

Or il a été constaté en pratique que, dans les presses à balles rondes de ce type, la tension des courroies résultant de leur entraînement par le ou les rouleaux entraînés positivement est supérieure à la tension résultant de l'action exercée par les moyens de sollicitation précités. La plus grande partie de la puissance fournie par l'arbre de prise de force du tracteur est en fait utilisée pour l'entraînement des courroies et, à vitesse constante, la tension de ces courroies va ainsi augmenter avec le couple d'entraînement fourni par l'arbre, lui-même en fonction du couple resistant. En conséquence, pour maintenir la tension dans les courroies à un maximum, il est judicieux de maintenir également à une valeur maximum le couple d'entraînement.

Il est connu dans la pratique, pour parvenir à ce résultat, de diriger la presse de façon à créer une plus grande densité de produits sur les côtés de sorte qu'il se produit alors une friction des produits sur les parois latérales de la presse, ce qui freine la balle et augmente ainsi le couple d'entraînement et en conséquence la tension dans les courroies. Mais on comprendra qu'une telle solution ne peut constituer qu'un artifice et ne présente aucun caractère de logique technique.

Le but de l'invention est d'apporter une solution au problème posé, permettant d'augmenter la tension des courroies pour obtenir une balle suffisamment dense ou "serrée" en maintenant cette tension des courroies sensiblement à une valeur maximum.

L'invention concerne en conséquence une presse à balles cylindriques ou rondes du type comprenant des jeux de courroies ou analogues formant par enroulement à l'interieur de la chambre de formation de la presse une balle de forme générale cylindrique ou ronde à partir de produits de récolte ramassés sur le sol, ces courroies étant entraînées par au moins un rouleau d'entraînement à partir d'un arbre d'entraînement principal pouvant être relié à l'arbre de prise de force d'un tracteur et passant sur rouleaux fixes et mobiles, lesdites rouleaux de renvoi mobiles étant soumis à l'action de moyens de sollicitation desinés à mettre lesdites courroies sous tension, caractérisée en ce que des moyens de freinage de courioies agissent sur l'un au moins des rouleaux de renvoi de la presse placé en amont de la chambre de formation quand on considère le sens de déplacement des courroies.

De préférence, ces moyens de freinage sont combinés au premier rouleau de renvoi délimitant la chambre de formation de la balle dans la presse quand on considère le sens de déplacement des courroies.

Du fait du freinage ainsi réalisé, le couple d'entraînement du ou des rouleaux d'entraînement des courroies est maintenu à sa valeur maximum, et il en est de même de la tension dans ces courroies tout autour de la balle, en particulier lorsque l'action de freinage est exercée sur le premier rouleau de renvoi délimitant la chambre de formation de la balle.

Suivant l'invention, l'effet de freinage peut être exercé en prévoyant des moyens prélevant de l'énergie au rouleau de renvoi considéré, pour assurer un entraînement.

Suivant un mode de réalisation possible, il est prévu une pompe hydraulique qui est reliée à un rouleau de renvoi. L'énergie dépensée pour l'entraînement de cette pompe hydraulique exerce ainsi l'action de freinage désirée sur ce rouleau de renvoi. La pompe hydraulique prévue peut débiter du liquide directement vers un réservoir auquel ledit liquide est également prélevé, mais si l'on desire éviter la perte résultant de cette dissipation d'énergie sans travail utile, le côté refoulement de la pompe peut être relié à un ou plusieurs dispositifs hydrauliques fournissant un travail utile sur la presse.

Suivant un agencement possible, on prévoit sur l'arbre ou sur l'un des arbres d'entraînement des courroies de la presse un moteur hydraulique alimenté à partir de la pompe. Ce moteur hydraulique peut, par exemple, être combiné au rouleau d'entraînement qui est lui-même entraîné par l'arbre principal de la presse relié à l'arbre de prise de force du tracteur. Dans un tel cas, la pompe hydraulique entraînée à partir du rouleau de renvoi dont la rotation est assurée par les courroies et le moteur hydraulique conjugué au rouleau d'entraînement de la presse sont agencés de telle sorte que le débit fourni par la pompe soit un peu supérieur au débit requis par le moteur hydraulique pour une vitesse donnée des courroies. Dans ce cas, seule une petite quantité de l'huile fournie par la pompe est renvoyée au réservoir, par exemple à travers un clapet de détente. Cette quantité d'huile excédentaire pourrait toutefois être dirigée également vers d'autres dispositifs utilisateurs prevus sur la presse.

Suivant une variante de réalisation, le rouleau de renvoi considéré est relié par une transmission mécanique ou autre au rouleau ou à l'un des rouleaux d'entraînement des courroies de la presse. De façon préférentielle, cette transmission est telle que ce rouleau d'entraînement des courroies tende à tourner plus vite que le rouleau auquel l'énergie est prélevée. Un accouplement à glissement est alors intercalé dans cette transmission, entre ce rouleau de renvoi soumis à l'effet de freinage et ce rouleau d'entraînement des courroies de la presse. L'énergie d'entraînement ainsi fournie à ce dernier rouleau se superpose à l'effort d'entraînement transmis depuis l'arbre principal de la presse. Il résulte de cette disposition, du fait que le rouleau d'entraînement tend à tourner plus vite que le rouleau de renvoi, un effet de tension accru dans les courroies entre lesdits rouleaux, cette tension étant contrôlée par le glissement dans l'accouplement intercalé dans la transmission.

La description qui va suivre, faite en regard des dessins annexés, donnés à titre non limitatif, permettra de mieux comprendre l'invention.

La Fig. 1 est une représentation schématique de profil d'une presse à balles cylindriques ou rondes agencée suivant un mode de réalisation de l'invention.

La Fig. 2 est une vue analogue à la Fig. 1 mais correspondant à une variante.

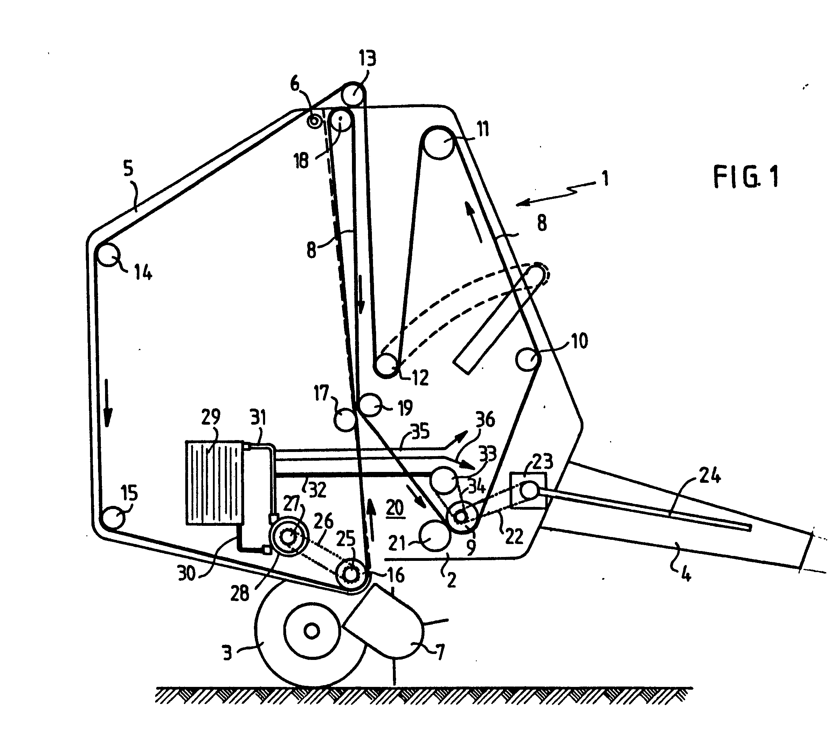

Sur la Fig. 1, on a désigné d'une façon générale par la référence 1 une presse à balles cylindriques ou rondes comportant un châssis 2 supporté par des roues 3 et muni à sa partie avant d'un timon ou d'une flèche d'attelage 4 destinée à être attelée à un tracteur non représenté. Cette presse comprend de la façon habituelle une porte arrière 5 relevable autour d'un axe horizontal transversal supérieur 6 pour permettre son ouverture en vue du déchargement des balles formées et liées à l'intérieur de la presse. On a représenté en 7 le ramasseur qui est prévu de la façon usuelle sur la presse pour ramasser sur le sol les produits y reposant généralement en andains et destinés à former des balles.

La presse représentée schématiquement sur la Fig. 1 est du type comportant un seul jeu de courroies ou analogues 8 passant sur des rouleaux 9 à 19 définissant pour ces courroies un trajet délimitant à l'intérieur de la presse une chambre indiquée schématiquement en 20, qui présente au début de l'opération un volume très faible comme visible sur le dessin, ce volume augmentant par déplacement des rouleaux de renvoi mobiles, d'une manière en soi bien connue dans cette technique. On a indiqué en 21 un rouleau d'amorçage qui intervient pour favoriser l'enroulement des produits de récolte ramassés par le ramasseur 7 au début de la formation de la balle.

Les rouleaux de renvoi mobiles de la presse sont soumis à l'effet de moyens de sollicitation tels que des cylindres hydrauliques ou des ressorts destinés à créer une tension dans les courroies, ces éléments en soi bien connus n'étant pas représentés sur le dessin pour plus de clarté.

Sur la Fig. 1, on voit que le rouleau 9 est relié par une transmission 22 à une boîte de transfert 23 qui est elle-même entraînée à partir de l'arbre d'entraînement de la presse indiqué en 24, lequel est destiné à être relié à l'arbre de prise de force du tracteur auquel la presse est attelée. Le rouleau fixe 11 est également, dans le cas présent, un rouleau d'entraînement. Il est commandé lui-même d'une manière classique par une transmission prévue entre le rouleau 9 et ce rouleau 11, qui n'est pas représentée sur le dessin pour plus de clarté.

Comme indiqué précédemment, il a été constaté que, dans les presses de ce type, la tension dans les courroies résultant de l'entraînement avec un couple donné est supérieure à la tension qui résulte de l'effet exercé par les moyens de sollicitation tels que les cylindres hydrauliques ou les ressorts et que pour obtenir une tension appropriée dans les courroies il est en conséquence judicieux de maintenir le couple d'entraînement au voisinage de sa valeur maximum.

Pour parvenir à ce résultat, suivant le mode de réalisation représenté sur la Fig. 1, il est prévu sur l'arbre du rouleau 16 une roue à chaîne 25 qui est reliée par une chaîne 26 à une roue à chaîne 27 assurant l'entraînement d'une pompe hydraulique représentée schématiquement en 28. On a indiqué en 29 un réservoir auquel la pompe hydraulique prélève du liquide par un conduit basse pression 30, cette pompe refoulant ce liquide par un conduit haute pression 31. On comprend ainsi qu'il va résulter de l'effort résistant créé par la pompe hydraulique 28 un effet de freinage du rouleau de renvoi 16, de sorte que la tension des courroies 8 va augmenter entre le rouleau d'entraînement 9, qui est le dernier rouleau délimitant la chambre de formation de la balle et le rouleau 16, qui suivant le mode de réalisation préférentiel considéré est le premier rouleau délimitant cette chambre quand on considère le sens de déplacement des courroies. Ainsi, la portion des courroies soumise à l'effet de tension accru correspond à une longueur de courroies entourant complètement ou presque complètement la balle au cours de sa formation.

La pompe hydraulique peut refouler du liquide directement vers le réservoir, sans travail utile. Toutefois, suivant le mode de réalisation préférentiel considéré, il est prévu en dérivation avec le conduit haute pression 31 un conduit 32 qui est relié à un moteur hydraulique 33 assurant par une transmission indiquée en 34 l'entraînement du rouleau 9 d'entraînement des courroies. L'entraînement ainsi fourni se superpose à celui provenant de l'arbre principal 24 de la presse par l'intermédiaire de la boîte de transfert 23. Le débit absorbé par le moteur hydraulique 33 va alors être un peu inférieur au débit fourni par la pompe hydraulique 28, et la petite quantité de liquide en excès peut être refoulée vers le réservoir par le conduit 31.

Toutefois, dans le mode de réalisation représenté, on a indiqué schématiquement deux autres conduits 35, 36 qui peuvent être reliés à des dispositifs utilisateurs prevus sur la presse, tels que le mécanisme de liage ou un autre dispositif, afin de fournir ici encore un travail utile à l'aide de cette petite quantité de liquide excédentaire refoulée par la pompe 28 par rapport à la quantité de liquide requise par le moteur hydraulique 33.

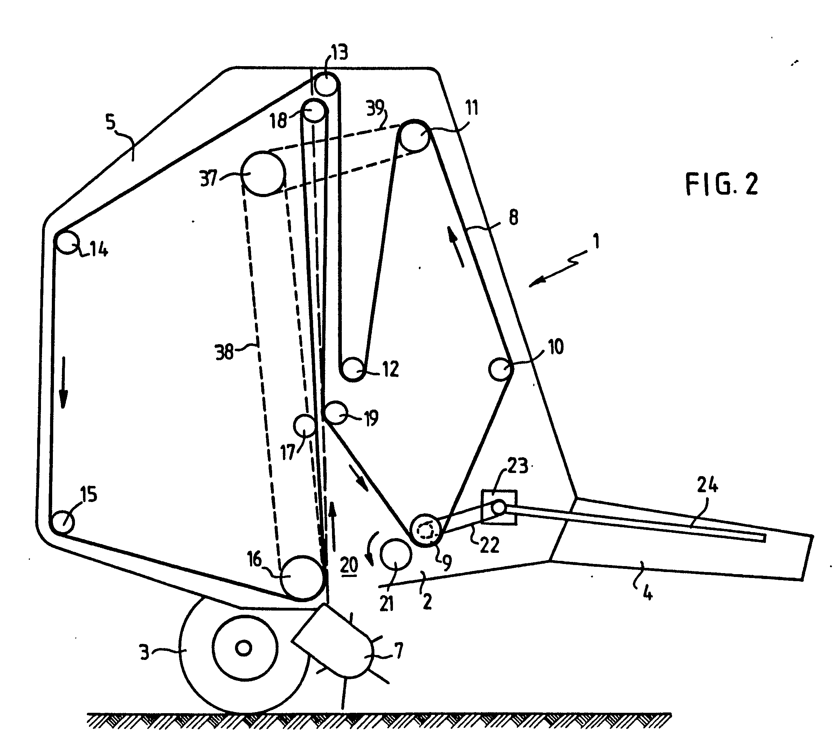

On a représenté sur la Fig. 2 une variante de réalisation de l'invention. Sur cette Fig. 2, les éléments identiques à ceux visibles sur la Fig. 1 ont été désignés par les mêmes références. Dans ce cas encore, un effet de freinage est exercé sur le rouleau de renvoi 16, qui est le premier rouleau délimitant la chambre de formation de la balle si l'on considère le sens de déplacement des courroies 8. De ce fait, la portion des courroies qui se trouve entre le rouleau d'entraînement 9 et le rouleau 16 et qui entoure complètement ou presque complètement la balle est soumise ici encore à l'effet d'une tension supplémentaire résultant de l'action de freinage exercée.

Suivant le mode de réalisation représenté sur la Fig. 2, il est prévu sur la presse un accouplement à glissement qui est représenté d'une façon schématique en 37, et une transmission par exemple par chaîne 38 est prévue entre le rouleau 16 et cet accouplement à glissement 37, tandis qu'une autre transmission par exemple par chaîne 39 est prévue entre l'accouplement à glissement 37 et le rouleau supérieur fixe 11, qui est le second rouleau d'entraînement de la presse. Dans le cas du mode de réalisation considéré, les transmissions par chaînes 38 et 39 sont agencées de façon telle que le rouleau 11 tende à être entraîné à une vitesse de rotation un peu supérieure à la vitesse de rotation du rouleau 16, la différence de vitesse étant absorbée par l'accouplement à glissement 37. On comprend que l'on tire ainsi partie de l'énergie fournie par le freinage du rouleau 16 pour assurer un entraînement du rouleau 11 qui se superpose à l'entraînement transmis à partir de l'arbre principal 24 de la presse. Dans un tel cas, la transmission prevue précédemment entre les rouleaux 9 et 11 peut être supprimée.

On comprend à la lecture de la description qui précède que l'effet de freinage exercé sur le rouleau 16 par suite du prélèvement d'énergie va créer dans les brins des courroies qui s'étendent entre les rouleaux 9 et 16 une tension supplémentaire fournissant une balle de densité appropriée, tout en maintenant sensiblement au maximum le couple d'entraînement prélevé à l'arbre principal 24 de la presse.

**Revendications**

1. Presse à balles cylindriques ou rondes du type comprenant des jeux de courroies (8) ou analogues formant par enroulement à l'interieur de la chambre de formation (20) de la presse une balle de forme générale cylindrique ou ronde à partir de produits de récolte ramassés sur le sol, ces courroies (8) étant entraînées par au moins un rouleau d'entraînement (9,11) à partir d'un arbre d'entraînement principal (24) pouvant être relié à l'arbre de prise de force d'un tracteur et passant sur des rouleaux de renvoi fixes et mobiles (10, 12-19), lesdites rouleaux de renvoi mobiles étant soumis à l'action de moyens de sollicitation destinés à mettre lesdites courroies (8) sous tension, caracterisée en ce que des moyens de freinage (25-28, 37-39) de courroies (8) agissent sur l'un au moins des rouleaux de renvoi (16) de la presse placé en amont de la chambre de formation (20) quand on considère le sens de déplacement des courroies.

2. Presse à balles cylindriques suivant la revendication 1, caractérisée en ce que ces moyens de freinage (25-28, 37-39) agissent sur le premier rouleau de renvoi (16) des courroies délimitant la chambre de formation de la balle quand on considère le sens de déplacement des courroies.

3. Presse à balles cylindriques suivant la revendication 1 ou 2, caractérisée en ce que de l'énergie d'entraînement des courroies est prélevée au rouleau de renvoi (16) soumis à l'effet de freinage.

4. Presse à balles cylindriques suivant la revendication 1 ou 2, caractérisée en ce qu'une pompe hydraulique (28) est reliée au rouleau de renvoi (16) pour former ces moyens de freinage par l'absorption d'énergie pour l'entraînement de cette pompe hydraulique à partir de ce rouleau de renvoi.

5. Presse à balles cylindriques suivant la revendication 4, caractérisée en ce que la pompe hydraulique (28) refoule directement vers un réservoir (29) le liquide prélevé à ce réservoir.

6. Presse à balles cylindriques suivant la revendication 4, caractérisée en ce que la pompe hydraulique (28) alimente un ou plusieurs dispositifs utilisateurs équipant la presse.

7. Presse à balles cylindriques suivant les revendications 3 et 6, caractérisée en ce qu'il est prévu, en combinaison avec le rouleau (9) d'entraînement des courroies (8) de la presse, un moteur hydraulique (33) alimenté à partir de la pompe hydraulique (28) entraînée par ce rouleau (16) de renvoi des courroies.

8. Presse à balles cylindriques suivant la revendication 7, caractérisée en ce que la pompe hydraulique (28) entraînee à partir du rouleau de renvoi (16) dont la rotation est assurée par les courroies (8) et le moteur hydraulique (33) conjugué au rouleau d'entraînement (9) de la presse sont agencés de telle sorte que le débit fourni par la pompe soit un peu supérieur au débit requis par le moteur hydraulique pour une vitesse donnée des courroies, le débit excédentaire étant renvoyé au reservoir (29) ou dirigé vers un ou plusieurs dispositifs utilisateurs.

9. Presse à balles cylindriques suivant la revendication 3, caractérisée en ce que le rouleau de renvoi (16) est relié par une transmission mécanique (37-39) ou autre à l'un des rouleaux d'entraînement des courroies (8) de la presse.

10. Presse à balles cylindriques suivant la revendication 9, caractérisée en ce que cette transmission (37-39) est telle que ce rouleau (11) d'entraînement des courroies (8) tende à tourner plus vite que ce rouleau de renvoi (16), un accouplement à glissement (37) étant incorporé à la transmission prévue entre lesdits rouleaux.

**Patentansprüche**

1. Presse für zylindrische oder runde Ballen des Typs, der einen Satz von Riemen (8) oder analogen Elementen umfaßt, welche durch Aufwickeln im Inneren der Formkammer (20) der Presse einen allgemein zylindrischen oder runden Ballen aus vom Boden aufgesammelten Ernteprodukten bilden, bei der die Riemen (8) durch wenigstens eine Antriebsrolle (9, 11) von einer Hauptantriebswelle (24) angetrieben werden, die mit der Kraftabnahmewelle einer Zugmaschine verbunden werden kann, und über feste und bewegliche Umlenkrollen (10, 12 bis 19) laufen, wobei die genannten beweglichen Umlenkrollen der Wirkung von Vorspannmitteln unterworfen sind, die dazu bestimmt sind, die Riemen (8) unter Spannung zu setzen, dadurch gekennzeichnet, daß Bremsmittel (25 bis 28, 37 bis 39) der Riemen (8) auf wenigstens eine (16) der Umlenkrollen der Presse einwirken, die bei Berücksichtigung des Umlaufsinnes der Riemen stromaufwärts der Formkommer (20) angeordnet ist.

2. Presse für zylindrische Ballen nach Anspruch 1, dadurch gekennzeichnet, daß die Bremsmittel (25 bis 28, 37 bis 39) auf die bei Berücksichtigung des Umlaufsinnes der Riemen erste Umlenkrolle (16) der Riemen einwirken, welche die Kammer zur Bildung des Ballens begrenzen.

3. Presse für zylindrische Ballen nach Anspruch 1 oder 2, dadurch gekennzeichnet, daß die Energie zur Mitnahme der Riemen von der Umlenkrolle (16) abgeleitet wird, welche der Bremswirkung unterworfen ist.

4. Presse für zylindrische Ballen nach Anspruch 1 oder 2, dadurch gekennzeichnet, daß eine hydraulische Pumpe (28) mit der Umlenkrolle (16) verbunden ist, um jene Bremsmittel zu bilden und von der Umlenkrolle Energie für den Antrieb dieser hydraulischen Pumpe zu absorbieren.

5. Presse für zylindrische Ballen nach Anspruch 4, dadurch gekennzeichnet, daß die hydraulische Pumpe (28) die Flüssigkeit direkt in ein Reservoir (29) drückt, von dem die Flüssigkeit entnommen worden ist.

6. Presse für zylindrische Ballen nach Anspruch 4, dadurch gekennzeichnet, daß die hydraulische Pumpe (28) eine oder mehrere zur Ausrüstung der Presse gehörende Hilfseinrichtungen speist.

7. Presse für zylindrische Ballen nach den Ansprüchen 3 und 6, dadurch gekennzeichnet, daß in Verbindung mit der Rolle (9) zum Antreiben der Riemen (8) der Presse ein hydraulischer Motor (33) kombiniert ist, der von der hydraulischen Pumpe (28) gespeist wird, die durch die Rolle (16) zum Umlenken der Riemen angetrieben wird.

8. Presse für zylindrische Ballen nach Anspruch 7, dadurch gekennzeichnet, daß die hydraulische Pumpe (28), welche von der Umlenkrolle (16) angetrieben wird, deren Drehung durch die Riemen (8) sichergestellt wird, sowie der hydraulische Motor (33), der der Antriebsrolle (9) der Presse zugeordnet ist, so angeordnet sind, daß für eine vorgegebene Geschwindigkeit der Riemen die Mengenleistung, die durch die Pumpe geliefert wird, ein wenig größer ist als der Mengenbedarf des hydraulischen Motors, wobei die Überschußmenge in das Reservoir (29) zurückgeführt oder zu einer oder mehreren Hilfseinrichtungen umgeleitet wird.

9. Presse für zylindrische Ballen nach Anspruch 3, dadurch gekennzeichnet, daß die Umlenkrolle (16) über eine mechanische (37-39) oder eine andere Kraftübertragungseinrichtung mit einer der Antriebsrollen für die Riemen (8) der Presse verbunden ist.

10. Presse für zylindrische Ballen nach Anspruch 9, dadurch gekennzeichnet, daß jene Kraftübertragungseinrichtung (37 bis 39) derart ausgebildet ist, daß die Mitnehmerrolle (11) für die Riemen (8) dazu neigt, schneller zu drehen, als die Umlenkrolle (16), wobei in der zwischen den genannten Rollen vorgesehenen Kraftübertragungseinrichtung eine Gleitkupplung (37) enthalten ist.

## Claims

1. A baler for making cylindrical or round bales of the type comprising sets of belts (8) or the like forming by winding inside the forming chamber (20) of the baler a bale generally cylindrical or round in form from crop material collected from the ground, these belts (8) being driven by at least one drive roller (9, 11) from a main drive shaft (24) capable of connection with the power-take-off of a tractor and passing over fixed and mobile return rollers (10, 12-19), said mobile return rollers being subjected to the action of stressing means designed to put said belts (8) under tension, characterized in that braking means (25-28, 37-39) of belts (8) act on one at least of the baler return rollers (16) situated upstream of the forming chamber (20) when viewed in the belt displacement direction.

2. A baler for making cylindrical bales according to claim 1, characterized in that these braking means (25-28, 37-39) act on the first return roller (16) of the belts defining the bale forming chamber when viewed in the displacement direction of the belts.

3. A baler for making cylindrical bales according to claim 1 or claim 2, characterized in that the belt drive energy is drawn off at the return roller (16) subjected to the braking effect.

4. A baler for making cylindrical bales according to claim 1 or claim 2, characterized in that a hydraulic pump (28) is connected to the return roller (16) to form these braking means by absorption of energy for driving this hydraulic pump from this return roller.

5. A baler for making cylindrical bales according to claim 4, characterized in that the hydraulic pump (28) directly delivers to a tank (29) the liquid drawn off from this tank.

6. A baler for making cylindrical bales according to claim 4, characterized in that the hydraulic pump (28) supplies one or more user devices with which the baler is equipped.

7. A baler for making cylindrical bales according to any one of claims 3 to 6, characterized in that there is provided, in conjunction with the roller (9) driving the baler belts (8), a hydraulic motor (33) supplied from the hydraulic pump (28) driven by this belt return roller (16).

8. A baler for making cylindrical bales according to claim 7, characterized in that the hydraulic pump (28) driven from the return roller (16) whose rotation is ensured by the belts (8) and the hydraulic motor (33) connected with the baler drive roller (9) are arranged such that the output supplied by the pump is slightly greater than the output required by the hydraulic motor for a given belt speed, the excess output being returned to the tank (29) or directed towards one or more user devices.

9. A baler for making cylindrical bales according to claim 3, characterized in that the return roller (16) is connected by a mechanical transmission means (37-39) or the like to one of the rollers driving the baler belts (8).

10. A baler for making cylindrical bales according to claim 9, characterized in that this transmission means (37-39) is such that this roller (11) driving the belts (8) tends to turn more quickly than this return roller (16), a sliding coupling (37) being incorporated with the transmission means provided between said rollers.

FIG. 1

FIG. 2